# FASCICULE DE BREVET EUROPEEN

(11) **EP 2 956 926 B1**
(45) Date de publication et mention de la délivrance du brevet: **19.09.2018**
(21) Numéro de dépôt: 14704135.4
(22) Date de dépôt: 11.02.2014
(51) Int. Cl.: H04W 4/021, G06K 7/10, G09G 5/00

(54) **SYSTÈME INTERACTIF À BASE DE TAGS POUR DISPOSITIF DIFFUSANT UN CONTENU MULTIMÉDIA**
TAG-BASIERTES INTERAKTIVES SYSTEM ZUR ANZEIGE VON MULTIMEDIAINHALT
TAG BASED INTERACTIVE SYSTEM TO DISPLAY MULTIMEDIA CONTENT

(30) Priorité: 13.02.2013 FR 1351203
(43) Date de publication de la demande: 23.12.2015
(73) Titulaire: Think and Go NFC., 13590 Meyreuil (FR)
(72) Inventeur: BAKER, Tim, F-13600 La Ciotat (FR); BERGE, Vincent, F-13014 Marseille (FR)
(74) Mandataire: Decobert, Jean-Pascal
(86) Numéro de dépôt international: PCT/EP2014/052656
(87) Numéro de publication internationale: WO 2014/124942

(56) Documents cités:
- US-A1- 2008 303 682
- US-A1- 2010 271 177
- US-A1- 2012 206 391
- US-A1- 2012 208 466
- ROBERT HARDY ET AL: "Mobile interaction with static and dynamic NFC-based displays", PROCEEDINGS OF THE 12TH INTERNATIONAL CONFERENCE ON HUMAN COMPUTER INTERACTION WITH MOBILE DEVICES AND SERVICES, MOBILEHCI '10, 1 janvier 2010 (2010-01-01), page 123, XP055095873, New York, New York, USA DOI: 10.1145/1851600.1851623 ISBN: 978-1-60-558835-3
- ROBERT HARDY ET AL: "Mobile interaction with static and dynamic NFC-based displays", PROCEEDINGS OF THE 12TH INTERNATIONAL CONFERENCE ON HUMAN COMPUTER INTERACTION WITH MOBILE DEVICES AND SERVICES; LISBON, PORTUGAL ; SEPTEMBER 07 - 10, 2010, ACM, NEW YORK, NY, 7 September 2010 (2010-09-07), pages 123-132, XP058182421, DOI: 10.1145/1851600.1851623 ISBN: 978-1-60558-835-3

## Description

L'invention concerne tout dispositif comportant une interface de sélection (façade interactive, clavier alphanumérique, périphérique de pointage) permettant à un utilisateur d'interagir directement sur le dispositif pour obtenir des informations en lien avec un produit ou un service voire même la délivrance dudit produit ou dudit service. L'invention concerne plus précisément, mais de manière non limitative, les panneaux ou vitrines interactives permettant de délivrer des informations de localisation, des prix, etc.

Des nombreuses vitrines interactives sont déployées dans des lieux publics. Elles permettent à leurs utilisateurs de naviguer très simplement au moyen de menus ou via des contenus multimédia diffusés généralement par un écran ou un moniteur. Les premières vitrines ou certains distributeurs de denrées alimentaires proposent par exemple un ou plusieurs écrans électroniques ou des présentoirs protégés par des parois translucides. Pour sélectionner un article ou une rubrique, un utilisateur actionne un périphérique de pointage du type molette ou « *track ball* »*.* Il peut ainsi sélectionner la référence d'un accessoire parmi une pluralité selon certains critères (par exemple des essuie-glaces au regard d'un modèle de véhicule). Il peut par ailleurs acheter un titre de transport dans une gare, etc. En variante, un utilisateur peut saisir une chaîne alphanumérique au moyen d'un clavier et ainsi désigner ou sélectionner un produit ou un service.

L'interactivité proposée par de tels dispositifs demeure toutefois sommaire. Pour en augmenter l'attractivité, certains constructeurs ont doté la façade principale de ces derniers d'un écran parfois tactile voire de taille conséquente offrant une utilisation davantage ludique. Cette solution s'est toutefois révélée onéreuse et peu fiable lors d'un usage intensif notamment à cause du coût élevé des écrans tactiles et de leur fragilité. En outre, un écran positionné au niveau de la façade d'un distributeur de denrées peut masquer certains produits disponibles à la vente voire occulter ces derniers entièrement. Pour répondre à cet inconvénient, d'autres dispositifs ont été munis de façades interactives (mettant en oeuvre par exemple la technique de la stéréovision) en lieu et place d'un clavier ou d'un écran tactile, ladite façade coopérant avec une unité de commande. Cette technique consiste par exemple à disposer des capteurs autour d'une paroi généralement translucide ceinturée par un cadre éclairé ou rétro-éclairé par des sources lumineuses émettant dans le visible ou le proche infrarouge. Un tel dispositif peut détecter un pointeur par exemple le doigt d'un utilisateur situé à proximité de ladite paroi translucide. A l'aide de méthodes connues, telles que la triangulation par exemple, il est possible de connaître précisément la position du pointeur sur la paroi. Que le dispositif exploite un écran tactile (à détection capacitive, sonore ou autre) ou bien une façade à détection optique, il est possible de préprogrammer l'unité de commande pour qu'une position particulière d'un pointeur déclenche l'affichage d'une information ou la distribution d'un produit ou d'un service.

Cette seconde génération de dispositifs interactifs apporte un gain significatif en matière d'ergonomie et d'attractivité. Toutefois, naviguer parmi les rubriques ou les menus peut s'avérer fastidieux. Plusieurs manipulations et sélections sont généralement requises pour accéder à des informations en lien avec un produit ou un service.

De tels dispositifs demeurent en outre limités quant à leurs capacités à distribuer des informations ou des produits. Généralement, l'information recherchée est volatile et n'est disponible que sur l'écran du dispositif à la vue du public. Il est délicat pour l'utilisateur de s'approprier ou de s'emparer de celle-ci pour pouvoir l'exploiter ultérieurement. Celui-ci n'a souvent pas d'autres choix que de prendre des notes manuscrites ou de saisir puis enregistrer de telles notes sur un dispositif nomade par exemple.

Pour contourner cette difficulté, certains fabricants de dispositifs interactifs proposent de transmettre l'information recherchée par courriel ou par messages courts (*Short Message Service* ou SMS selon une terminologie anglo-saxonne). Pour cela, l'utilisateur d'un dispositif interactif doit par exemple numériser un code-barres (tel qu'un QR code - abréviation de « *Quick Response* » selon une terminologie anglo-saxonne) au moyen d'un objet capable de supporter cette fonction. Un code-barres de type QR code est constitué de modules noirs disposés dans un carré à fond blanc. C'est un code-barres en deux dimensions ou matriciel. L'agencement des modules détermine l'information encodée. Cette dernière peut être décodée rapidement après la lecture du code-barres par un lecteur tel qu'un téléphone mobile prévu à cet effet. A titre d'exemple, un tel code-barres peut encoder une adresse internet. Le lecteur peut ainsi automatiquement déclencher un navigateur Internet et permettre à l'utilisateur d'accéder à des informations complémentaires s'il bénéficie d'un réseau cellulaire ou d'un réseau sans fil (par exemple Wi-Fi). Toutefois l'information encodée est très limitée et statique. Un tel code n'est pas translucide. Si l'on souhaite apposer un tel code-barres devant un écran, le contenu diffusé par ce dernier est en partie occulté par ledit code-barres.

La communication en champ proche ou de proximité (notamment la technologie récente connue sous l'acronyme NFC pour *Near Field Communication* selon une terminologie anglo-saxonne) permet de résoudre partiellement cet inconvénient. Un tag (parfois désigné par le vocable « étiquette » ou encore « balise ») supplée le code-barres. Ce tag peut être lu par un lecteur (par exemple un téléphone mobile ou une tablette supportant cette fonction) au moyen d'une communication sans-fil de courte portée (généralement inférieure à dix centimètres de portée). Cette technologie est une extension de la norme ISO/CEI14443 normalisant la communication de cartes de proximité par radio-identification (RFID - *Radio Frequency Identification* selon une terminologie anglo-saxonne) qui combinent une interface de type carte à puce et un lecteur au sein d'un seul même périphérique. Un tel tag peut être apposé non plus devant l'écran mais derrière celui-ci afin de ne pas occulter une partie du contenu diffusé par ledit écran. On connait ainsi par exemple le document US 2010/271177 A1 qui présente une solution dans laquelle les tags sont apposés derrière un écran.

Toutefois que l'on utilise un tag ou un code-barres, l'information délivrée demeure statique. L'information délivrée par un tag demeure en outre sans lien avec la teneur du contenu diffusé par des moyens de diffusion d'un dispositif interactif. Cette solution devient notamment inadéquate si le contenu diffusé est dynamique : un carrousel pour présenter un grand nombre d'articles, de produits ou de services auxquels on souhaite associer des informations complémentaires. On pourrait imaginer que des code-barres fassent partie intégrante du contenu multimédia diffusé. Toutefois, les informations encodées par un tel code-barres demeureraient statiques et deviendraient en outre dépendantes du contenu lui-même. En d'autres termes, il ne serait pas possible d'associer des informations distinctes d'un dispositif par rapport à un second partageant un même contenu multimédia. De même, toute modification mineure d'une information complémentaire associée à une rubrique dudit contenu entraînerait une modification onéreuse (mise à jour et déploiement) du contenu lui-même.

L'invention permet de répondre à l'ensemble des inconvénients soulevés par les solutions connues en adaptant un dispositif comportant une unité de commande, des moyens pour diffuser un contenu multimédia, l'unité de commande coopérant avec lesdits moyens pour en assurer le pilotage, pour qu'il intègre un système interactif comportant une unité de traitement associée à des moyens de communication, au moins un tag apposé sur les moyens pour diffuser, ledit au moins un tag comportant des premiers moyens de communication pour communiquer directement avec l'unité de traitement et des deuxièmes moyens de communication pour permettre une communication sans fil avec un objet communicant lorsque celui-ci se trouve à portée dudit au moins un tag. En connectant ainsi un tag ou plusieurs tags à l'unité de traitement et en agençant celle-ci pour qu'elle déclenche une action en lien avec le contenu multimédia diffusé en réponse à une communication initiée par l'un des tags, il est possible de décupler significativement l'interactivité proposée par un dispositif ainsi adapté. De manière particulièrement avantageuse, l'unité de traitement est agencée pour communiquer avec l'unité de commande (UCd) de sorte à déclencher au moins une action mise en oeuvre par l'unité de traitement comprenant la transmission d'une requête en diffusion (P1) à l'unité de commande (UCd) pour modifier la teneur du contenu multimédia diffusé par les moyens pour diffuser (Md), en réponse à une communication initiée par ledit au moins un tag (T1, T2, Ti, Tn) par les premiers moyens de communication (Ct) et via les moyens de communication (C1) vers ladite unité de traitement (Uc).

Parmi les nombreux avantages apportés par l'invention, nous pouvons mentionner que l'invention permet :
- de maximiser l'interactivité, l'attractivité et l'ergonomie de dispositifs comportant des moyens de diffusion de contenus multimédia ;
- de diminuer les coûts de fabrication et de maintenance d'un dispositif interactif comportant notamment des moyens de diffusion de contenus multimédia en s'affranchissant de fonctions tactiles ou de périphérique de pointage et en protégeant lesdits moyens de diffusion par une paroi translucide, de préférence transparente ;
- de créer un lien entre le contenu multimédia diffusé par le dispositif et des informations pouvant être lues par un objet communicant ;
- de permettre à un objet communicant d'agir sur le contenu multimédia diffusé par le dispositif ;
- de délivrer instantanément des informations en lien avec un produit ou un service voire de percevoir ledit produit ou ledit service présenté par les moyens de diffusion d'un dispositif interactif selon l'invention ;
- de pouvoir modifier très simplement le contenu multimédia diffusé par un dispositif interactif ainsi que les informations voire les produits et services livrables par le dispositif ;
- d'adapter très simplement un dispositif traditionnel par l'intégration au sein de celui-ci d'un système interactif selon l'invention.

A cette fin, il est notamment prévu un système interactif pour un dispositif comportant une unité de commande, des moyens ou dispositifs de communication pour diffuser un contenu multimédia, l'unité de commande coopérant avec lesdits moyens pour en assurer le pilotage. Pour accroître l'interactivité du dispositif, le système comporte une unité de traitement comportant des moyens de communication et un microcontrôleur. Le système comporte en outre au moins un tag apposé sur les moyens pour diffuser. Ledit au moins un tag comporte des premiers moyens de communication pour communiquer avec l'unité de traitement et des deuxièmes moyens de communication pour communiquer sans fil avec un objet communicant lorsque celui-ci se trouve à portée dudit au moins un tag. Selon l'invention, l'unité de traitement est agencée pour déclencher une action en lien avec le contenu multimédia diffusé en réponse à une communication initiée par ledit au moins un tag avec ladite unité de traitement.

Une telle action mise en oeuvre par l'unité de traitement peut avantageusement consister à transmettre une requête en diffusion à l'unité de commande qui modifie en réponse la teneur du contenu diffusé par les moyens pour diffuser.

Dans le cas où l'unité de commande et l'unité de traitement consistent en une même entité physique, une action mise en oeuvre par l'unité de traitement peut consister en variante à modifier directement la teneur du contenu diffusé. Dans ce cas, une requête peut s'entendre par un traitement effectué par une même entité. La communication entre ces deux unités est ainsi interne à cet ensemble.

Pour pouvoir en outre agir sur le déroulement de la diffusion du contenu multimédia mais aussi pour pouvoir extraire du dispositif des informations que l'on peut ultérieurement analyser ou simplement consulter en privé ou encore pour pouvoir bénéficier directement d'un service, l'invention prévoit que ledit au moins un tag puisse comporter une mémoire dont le contenu peut être lu par un objet communicant lorsqu'une communication est établie entre le tag et ledit objet, l'action mise en oeuvre par l'unité de traitement consistant à mettre à jour la mémoire du tag.

Pour accroître le nombre d'interactions possibles, par exemple via différentes sections ou régions du contenu diffusé, un système selon l'invention peut comporter une pluralité de tags apposés contre lesdits moyens pour diffuser. Lesdits tags coopèrent en outre dans ce cas respectivement avec l'unité de traitement pour assurer une communication avec ladite unité de traitement.

Selon un mode de réalisation particulièrement avantageux, le ou les tags peuvent coopérer avec l'unité de traitement au moyen d'un bus filaire, parallèle, linéaire ou en anneau.

L'invention prévoit que le ou l'un des tags puisse émettre un message de détection d'un champ électromagnétique lorsque ledit tag a détecté la présence d'un champ électromagnétique généré par un objet communicant. L'unité de traitement reconnaît ainsi le tag qui est à l'origine du message et peut déclencher l'action idoine.

Dans le cas où le ou les tags comportent une mémoire lisible par un objet communicant, l'invention prévoit que ladite mémoire puisse être mise à jour par l'unité de traitement voire par l'objet communicant. Le bus peut dès lors véhiculer avantageusement un message de données à destination de l'unité de traitement ou du tag ou de l'un des tags connectés au bus.

Pour mettre à jour à distance le contenu diffusé voire les données restituables par le dispositif au travers du ou des tags connectés à l'unité de traitement, cette dernière peut avantageusement comporter des moyens de communication pour communiquer avec une deuxième unité de traitement distante.

Selon un deuxième objet, l'invention concerne un dispositif comportant une unité de commande, des moyens pour diffuser un contenu multimédia, l'unité de commande coopérant avec lesdits moyens pour en assurer le pilotage, ledit dispositif comportant en outre un système interactif selon l'invention.

Un tel dispositif peut offrir un premier niveau d'interactivité au travers de moyens pour diffuser qui consistent en une façade comportant un écran éventuellement tactile. En variantes, lesdits moyens pour diffuser peuvent consister en une façade interactive comportant un écran protégé par une paroi translucide associé à des moyens de détection d'un pointeur capacitifs ou optiques. Un tel dispositif combine avantageusement deux fonctions complémentaires et décuple ainsi son attractivité. Une première fonction réside en la détection du pointeur par des capteurs. Les moyens de détection vont attribuer un positionnement au pointeur correspondant à une zone spécifique de la paroi ou de l'écran. Cette zone spécifique est associée à une information du contenu multimédia Md. Une seconde fonction, complémentaire à la première, comprend le transfert du positionnement du pointeur à l'unité de traitement au moyen de l'unité de commande.

Selon un troisième objet, l'invention concerne en outre un procédé pour adapter un dispositif comportant une unité de commande, des moyens pour diffuser un contenu multimédia, l'unité de commande coopérant avec lesdits moyens pour en assurer le pilotage. Pour accroître l'attractivité du dispositif, le procédé comporte une étape pour intégrer audit dispositif un système interactif selon l'invention.

Pour que le système puisse répondre aux sollicitations d'un utilisateur muni d'un objet communicant et permettre ainsi audit utilisateur d'interagir avec le contenu diffusé, l'invention concerne un procédé mis en oeuvre par une unité de traitement d'un système interactif selon l'invention qui comporte une étape pour recevoir par les moyens de communication de l'unité de traitement un message de détection d'un champ électromagnétique, ledit message étant émis par le ou l'un des tags du système, une étape pour connaître le tag ayant émis ledit message, une étape pour commander une modification de la teneur du contenu multimédia diffusé par les moyens de diffusion selon le tag qui a émis le message de détection d'un champ électromagnétique.

Pour que l'utilisateur puisse extraire une information du dispositif et par exemple enregistrer celle-ci et l'exploiter ultérieurement, un tel procédé peut comporter en outre une étape pour transmettre un message de données à destination du tag ayant préalablement émis un message de détection d'un champ électromagnétique, ledit message de données consistant à modifier le contenu des moyens de mémorisation du tag.

Pour pouvoir modifier éventuellement le traitement découlant de la mise en oeuvre d'un tel procédé, l'invention concerne un programme d'ordinateur comportant des instructions exploitables par le microcontrôleur de l'unité de traitement d'un système interactif conforme à l'invention, qui lorsqu'elles sont exécutées ou interprétées par ledit microcontrôleur déclenchent la mise en oeuvre du procédé.

D'autres caractéristiques et avantages apparaîtront plus clairement à la lecture de la description qui suit et à l'examen des figures qui l'accompagnent parmi lesquelles :
- la figure 1 décrit un système interactif selon l'invention intégré à un dispositif comportant des moyens de diffusion de contenu multimédia sous la forme d'un périphérique de sortie vidéo tel qu'un moniteur ou un écran électronique ;
- la figure 2 illustre un schéma fonctionnel d'un tag prévu pour être connecté à l'unité de traitement d'un système interactif selon l'invention, ledit tag étant en communication avec un objet communicant ;
- la figure 3 décrit un mode de réalisation concernant la mise en relation d'une matrice de tags avec l'unité de traitement d'un système interactif selon l'invention.

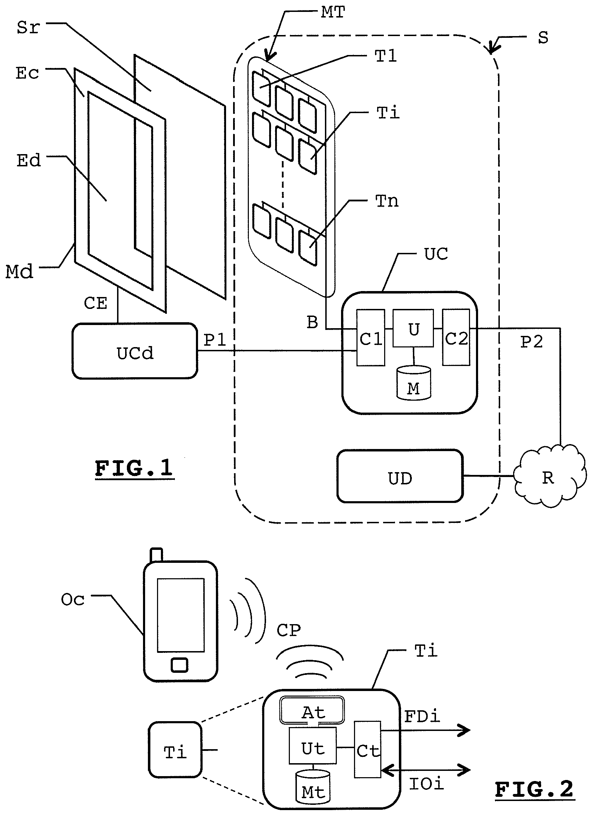

La figure 1 décrit un système interactif S selon l'invention. Un tel système est prévu pour être intégré à un dispositif (non intégralement représenté par la figure 1) qui comporte des moyens de diffusion Md de contenus multimédia sous la forme d'un ou plusieurs périphériques de sortie vidéo. Selon la figure 1 de tels moyens de diffusion Md consistent en un écran à cristaux liquides dit « LCD » (*Liquid Crystal Display* selon une terminologie anglo-saxonne), « LED » (*Light-Emitting Diode* selon une terminologie anglo-saxonne) voire « OLED » (*Organic Light-Emitting Diode* selon une terminologie anglo-saxonne). Les moyens de diffusion se présentent sous la forme d'une dalle Ed à cristaux liquides qui composent les points et les couleurs d'une image. Un éclairage situé derrière la dalle rend l'image lumineuse et visible. Pour un écran « LCD », cet éclairage est délivré par des tubes néon situés sur le pourtour ou le cadre Ec ceinturant la dalle Ed. Pour un écran « LED » ou « OLED », ce sont des diodes qui remplacent les tubes néon. Pour parfaire le rétro-éclairage, on utilise généralement une feuille réfléchissante Sr apposée au dos de la dalle Ed. La feuille réfléchissante Sr restitue l'éclairage au travers de la dalle Ed vers de potentiels utilisateurs.

La dalle Ed peut être protégée par une paroi (de verre ou de matière plastique) translucide, de préférence transparente, non représentée sur la figure 1. Cette protection est notamment utile pour équiper des dispositifs installés dans des lieux publics. Cette paroi permet de protéger l'écran. Une telle paroi de protection peut être celle d'une vitrine interactive derrière laquelle se trouverait la dalle Ed. Elle pourrait même être ceinturée d'un cadre comportant des capteurs optiques ou être tactile pour rendre la paroi interactive par stéréovision par exemple. En variante, si l'écran est lui-même tactile, cette paroi de protection ne peut être employée.

On entend par « tag » ou radio-étiquette, notamment un petit objet, tel qu'une étiquette auto-adhésive, qui peut être collé ou incorporé dans un objet ou produit. Le tag comprend généralement une antenne associée à une puce électronique qui lui permet de recevoir et/ou de répondre aux requêtes radio-émises depuis un émetteur-récepteur. Le tag peut être actif, connecté ou passif.

Le tag s'entend aussi par un moyen de communication sans fil permettant une communication basée sur l'électromagnétisme ou autre. Dans une autre variante de l'invention, le tag est formé à partir d'une technologie radio-fréquence. Une application au standard bluetooth est envisageable sans toutefois être limitative de l'invention.

Selon un mode de réalisation, le dispositif comprend un seul tag et une pluralité de capteurs configurés de sorte à détecter et déterminer la position d'un pointeur (par exemple, le doigt d'un utilisateur ou un téléphone portable). Le tag peut, dans ce cas, comporter une antenne qui entoure au moins en partie mais préférentiellement totalement l'écran. Selon un autre mode de réalisation, le dispositif comprend un réseau de tags auquel est associée une pluralité de tags.

La diffusion de contenus multimédia par les moyens de diffusion Md est pilotée par une unité de commande UCd qui coopère avec les moyens de diffusion Md par une liaison traditionnelle CE par exemple aux formats HDMI (*High Definition Multimedia Interface* selon une terminologie anglo-saxonne), DVI (*Digital Visual Interface* selon une terminologie anglo-saxonne) ou par toute autre liaison. L'unité de commande détermine ainsi la teneur, le défilement, les incrustations, (...) du contenu multimédia. Elle peut comporter des moyens de mémorisation - non décrits en liaison avec la figure 1 - pour contenir une pluralité de contenus voire un programme d'ordinateur dont les instructions mises en oeuvre par l'unité de commande agissent sur la diffusion du contenu par les moyens de diffusion. Cette unité de commande UCd peut en outre recevoir des requêtes en diffusion P1 émanant du monde extérieur pour agir sur le contenu diffusé en réponse auxdites requêtes.

Pour résoudre des inconvénients des solutions connues évoqués précédemment, l'invention prévoit d'adjoindre à un tel dispositif un système interactif S particulièrement innovant. Le système S comporte une unité de traitement UC. Selon certains dispositifs, une telle unité de traitement peut être l'unité de commande UCd du dispositif si celle-ci a été préalablement adaptée en conséquence. Les unités UCd et UC peuvent donc consister en une même entité physique voire demeurer distinctes mais aptes à communiquer entre-elles. L'exemple décrit en liaison avec la figure 1 illustre une unité de traitement UC distincte de l'unité de commande UCd. Un microcontrôleur U de l'unité de traitement UC transmet - via des moyens de communications C1 - des requêtes en diffusion P1 à destination de l'unité de commande pour que cette dernière pilote en réponse le contenu diffusé par les moyens de diffusion Md. L'unité de traitement communique en outre directement par exemple par l'intermédiaire d'un bus B avec un ou plusieurs tags T1 à Tn aptes à établir chacun une communication de proximité sans fil avec un objet communicant - objet non représenté par la figure 1. On entend par objet communicant, notamment une carte sans contact (par exemple, de type carte de paiement, carte de fidélité), un smartphone, ou encore tout dispositif microélectronique susceptible d'engendrer au moins une direction de communication avec le reste du système.

La figure 2 décrit de manière détaillée un schéma fonctionnel d'un tag Ti destiné à être connecté à l'unité de traitement d'un système interactif selon l'invention. Le tag Ti comporte un microcontrôleur Ut coopérant avec des premiers moyens de communication Ct pour communiquer avec une unité de traitement distante telle que l'unité UC décrite en liaison avec la figure 1. Le tag Ti comporte en outre des deuxièmes moyens de communication At (généralement sous la forme d'une bobine ou d'une antenne) pour permettre une communication sans fil CP avec un objet communicant Oc. Cette communication est établie lorsque ledit objet (par exemple un smartphone) se trouve à portée dudit tag. Le champ électromagnétique généré par l'objet réveille (en l'alimentant en énergie suffisante) le tag (plus précisément son microcontrôleur Ut). Il peut dès lors communiquer notamment avec l'objet. Le tag Ti peut comporter des moyens de mémorisation Mt dont le contenu peut être lu voire écrit par l'objet communicant. Selon un mode de réalisation préférentiel, le tag est doté de moyens de lecture et/ou d'écriture. Avantageusement, le tag est lisible et son contenu modifiable de sorte à pouvoir établir un échange bidirectionnel avec l'objet communicant, par exemple.

Le terme tag s'entend par ailleurs dans la présente demande comme couvrant des technologies de tags dans lesquelles des informations du tag sont uniquement lisibles, des technologies actives dans lesquelles des informations sont inscriptibles de façon modifiable au cours du temps, par exemple par une connexion à des moyens de traitement informatique du système et/ou par l'objet communicant ou autre, dans la mémoire du tag, et des technologies du type « reader » (lecteur/écriveur) impliquant un fonctionnement en mode maître de la part du tag, l'objet communicant ayant alors une fonction d'esclave ; le terme tag s'entend donc au sens large et couvre donc des dispositifs électroniques pouvant fonctionner en tant que maitre ou esclave dans un échange maitre esclave avec l'objet communicant.

Selon l'invention, le tag est par ailleurs connecté à une unité de traitement distante par l'intermédiaire d'un bus de données. Pour cela, le microcontrôleur Ut du tag Ti peut en outre - au travers des moyens de communication Ct - émettre un signal ou un message de détection d'un champ électromagnétique FDi. L'unité de traitement connectée au tag Ti et adaptée pour exploiter ledit signal est ainsi alertée par le tag de la présence d'un objet communicant à proximité dudit tag. Les moyens de communication Ct du tag peuvent en outre recevoir et/ou émettre des données (ou signaux de données) IOi depuis ou à destination de ladite unité de traitement connectée.

Selon un mode de réalisation préférée, le tag Ti est un tag mettant en oeuvre les technologies NFC ou RFID. Toute autre technologie apte à établir une communication de faible portée pourrait être en variante utilisée pour permette au tag d'interagir avec un objet communicant.

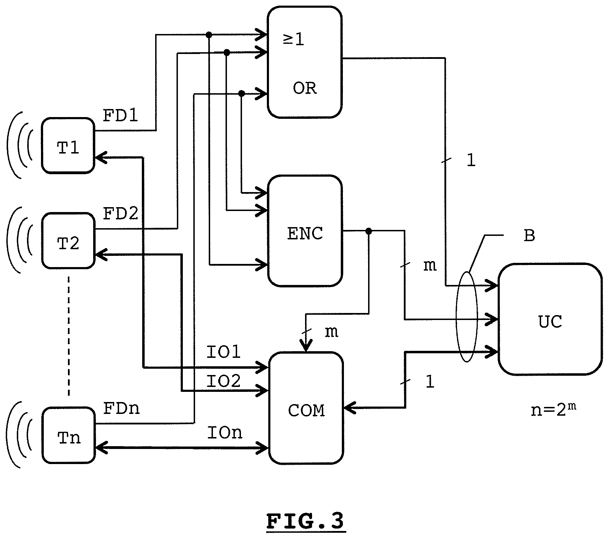

En liaison avec l'exemple du dispositif décrit par la figure 1, l'unité de traitement UC est connectée via un bus de communication B à une matrice MT de tags T1 à Tn. Chaque tag est connecté par l'intermédiaire dudit bus à l'unité de traitement. Un exemple préféré de connexion desdits tags à l'unité de traitement UC est détaillé plus loin en liaison avec la figure 3.

Un système interactif S selon l'invention ne requiert pas une telle matrice de tags. Un seul tag peut suffire pour détecter un objet et engendrer des actions en lien avec le contenu diffusé par les moyens de diffusion (par exemple un bouton virtuel pour stopper un défilement) comme nous le verrons ultérieurement.

Pour offrir l'interactivité recherchée, le tag (ou la matrice de tags MT) est apposé(e) sur les moyens de diffusion Md, de préférence au dos desdits moyens de diffusion. A titre d'exemple et tel que l'illustre la figure 1, le ou les tags peuvent être avantageusement fixés à l'aide d'une colle ou d'une feuille adhésive au dos de la feuille réfléchissante Sr elle même apposée contre la dalle Ed. Apposer ou plus généralement disposer (par tous moyens de fixation) une matrice de tags derrière la dalle permet de créer autant de « zones actives » au sein du contenu diffusé - plus précisément au niveau des moyens de diffusion - qu'il existe de tags. Une telle matrice de tags de préférence plane est ainsi positionnée - sans qu'un contact direct ne soit nécessairement requis entre ladite matrice et le dos des moyens de diffusion - sensiblement parallèle au plan de la dalle (ou plan de diffusion). Dans le cas où les moyens de diffusion ne seraient pas plans, la matrice de tags épouserait avantageusement la géométrie de diffusion. Supposons qu'un utilisateur approche un objet communicant d'une « zone active » de la dalle (correspondant par exemple à un article dépeint à l'aide du contenu multimédia ou à un bouton virtuel). Le tag (par exemple le tag Ti) - traversé par un axe virtuel traversant en outre l'objet communicant et la dalle - est alimenté par le champ électromagnétique délivré par l'objet lorsque celui est à portée dudit tag. Le tag délivre automatiquement un signal de détection d'un champ électromagnétique FDi véhiculé par le bus B. L'unité de traitement UC est ainsi informée de la présence d'un objet sensiblement à proximité d'une zone active de la dalle. L'unité de traitement peut donc par exemple déclencher une requête en diffusion adressée à l'unité de commande pour modifier la teneur du contenu multimédia diffusé. Une telle modification peut consister en la diffusion d'un second contenu ou l'incrustation d'un message informatif à destination de l'utilisateur de l'objet communicant.

En variante, l'unité de traitement peut déclencher une action visant à mettre à jour la mémoire Mt du tag qui a détecté un champ électromagnétique. Un signal ou un message de données IOi est transmis au tag Ti via le bus B par l'unité de traitement UC. L'objet situé à proximité dudit tag Ti peut ainsi lire le contenu de la mémoire dudit tag. De même, si à présent le tag Tn est à son tour sollicité (i.e. réveillé) par l'objet communicant, Tn génère à son tour un signal ou un message de détection d'un champ électromagnétique FDn. Ce dernier est acheminé à l'unité de traitement UC par le bus B. Celle-ci déclenche à son tour une action distincte de la précédente, la « zone active » i.e. une aire de la dalle d'une taille déterminée autour du tag Tn étant associée à une seconde rubrique du contenu multimédia diffusé.

Dans le cas où l'unité de commande UCd du dispositif et l'unité de traitement UC du système S consistent en une même entité physique, l'action mise en oeuvre par ladite unité de traitement consiste à modifier directement la teneur du contenu diffusé par les moyens pour diffuser Md.

L'exemple illustré en liaison avec la figure 1 concerne plus précisément un dispositif du type vitrine interactive comportant un écran sous la forme d'une dalle LCD ou LED / OLED. En variante, l'invention permet également de doter d'un système interactif similaire un distributeur de denrées alimentaires pour lequel la dalle serait substituée par un présentoir de denrées. D'autre part, tout autre moyen de diffusion pourrait être utilisé par exemple sonore ou plus généralement tout moyen apte à véhiculer une information perceptible par l'un des sens d'un utilisateur. On pourrait en outre adapter de manière similaire un poste de télévision pour mettre en oeuvre une application de téléachat par exemple. De même, les moyens pour diffuser peuvent consister en un simple écran sur laquelle le contenu multimédia est projeté via un vidéoprojecteur piloté par l'unité de commande.

En liaison avec la figure 1, l'invention prévoit en outre, que l'unité de traitement UC peut être également connectée à une unité UD distincte et distante. A ce titre, l'unité de traitement UC peut comporter des moyens de communication C2 pour interagir avec une telle unité distante. A titre d'exemple, les unités peuvent ainsi communiquer au travers du réseau Internet ou via un réseau privé R. De cette manière, les tags de la matrice MT sont virtuellement connectés à ladite unité distante UD. Cette dernière peut éventuellement préparer des requêtes en diffusion destinées à l'unité de commande UCd véhiculées au travers de l'unité de traitement UC.

La figure 3 décrit un mode de réalisation préféré de la connexion directe d'un tag (ou d'une matrice de tags T1, T2 à Tn) à une unité de traitement UC. Cette connexion est schématisée par mesure de simplification par le bus B décrit en liaison avec la figure 1. Selon la figure 3, n tags sont connectés à l'unité de traitement UC. Chaque tag est similaire au tag Ti décrit en liaison avec la figure 2. Ils sont chacun aptes à communiquer selon un protocole sans contact avec un objet communicant situé à leur proximité. Cet objet n'est pas représenté en figure 3. Dès que l'un des tags est alimenté par le champ électromagnétique généré par un tel objet, le tag transmet à destination de l'unité de traitement un signal ou un message de détection d'un champ électromagnétique. Ainsi, les tags T1, T2 et Tn délivrent respectivement les signaux FD1, FD2, FDn dès qu'ils sont individuellement sollicités par un tel objet. Un tel signal peut consister avantageusement à transmettre une information booléenne : « vrai » signifie qu'un objet a réveillé un tag. L'absence de toute détection équivaut à l'information booléenne « faux ».

Pour véhiculer lesdits messages et permettre à l'unité de connaître le tag ayant détecté un champ électromagnétique, l'invention prévoit qu'un premier signal de détection de la présence d'un objet communicant soit élaboré et transmis à l'unité de traitement. Un tel signal peut être élaboré par des moyens OR réalisant l'addition booléenne des signaux de détection d'un champ électromagnétique potentiellement transmis par les différents tags.

Supposons que le nombre de tags n soit égal 2^{m}. Les tags T1 à Tn sont également connectés à des moyens encodeurs ENC pour encoder les éventuels messages FD1 à FDn. Lesdits moyens encodent les signaux FD1 à FDn et délivrent à l'unité de traitement une valeur (i-1) codée sur m bits. L'unité de traitement connaît ainsi le tag Ti qui a détecté un champ électromagnétique. Il suffit pour cela que le microcontrôleur U de l'unité de traitement décode la sortie de l'encodeur. Ce mode de réalisation permet de simplifier et réduire (de n à m) le nombre de connexions nécessaires à l'unité de traitement. L'exemple de réalisation de la connexion B décrit en liaison avec la figure 3 permet en outre de véhiculer des messages ou des signaux de données IO1 à IOn émis par les tags à destination de l'unité de traitement. Réciproquement des messages ou des signaux de données IO1 à IOn émis par l'unité de traitement peuvent être véhiculés à destination des tags ou de l'un des tags en particulier. L'invention prévoit à ce titre de connecter les tags à des moyens commutateurs COM adressés par la valeur m déduite des moyens OR ou élaborée par l'unité de traitement pour multiplexer lesdits signaux. L'invention ne saurait être limitée à ce seul exemple de réalisation. Toute autre connexion pourrait être envisagée : par exemple un bus filaire, parallèle, série linéaire ou en anneau.

Quels que soient les moyens choisis pour connecter un ou plusieurs tags à une unité de traitement et quelles que soient les requêtes ou les actions déterminées pour piloter le contenu multimédia diffusé par des moyens de diffusion, l'invention accroît grandement l'interactivité proposée par un dispositif conforme à l'invention.

Pour décupler davantage l'attractivité des dispositifs, une ou plusieurs applications peuvent en outre être chargées ou préinstallées au sein de moyens de mémorisation d'un objet communicant apte à interagir avec l'un des tags. L'utilisateur dudit objet peut dès lors bénéficier de services supplémentaires : achat en ligne, consultations d'informations additionnelles éventuellement personnalisées (le ou lesdits tags pouvant en outre réceptionner puis transmettre à l'unité de traitement des données émanant de l'objet).

Pour pouvoir mettre en oeuvre certaines applications, l'invention prévoit que les informations éventuellement restituables par un tag connecté à l'unité de traitement puissent comporter un horodatage de la mise en relation avec l'objet communicant. On peut ainsi par exemple adapter un poste de télévision en le dotant d'un système interactif selon l'invention (comportant une unité de traitement connectée à un ou plusieurs tags apposés à l'arrière de la dalle du téléviseur) et l'exploiter pour mettre en oeuvre un service de téléachat ou de télévote. En lisant la mémoire d'un tag, l'objet communicant collecte des données désignant une zone active de la dalle du téléviseur ainsi qu'un horodatage de l'instant où l'objet communicant a éveillé le tag. Ces deux informations sont suffisantes pour caractériser un article parmi une pluralité d'articles présentés par le contenu diffusé par le téléviseur. Avantageusement, l'invention permet une synchronisation entre l'instant où l'objet communicant a éveillé le tag et l'image détectée à cet instant donné. Plus précisément, le tag sollicité par l'objet communicant à un instant donné, correspond à une zone active spécifique de l'écran. Dans une variante, les moyens pour diffuser (Md) comprennent un flux vidéo auquel est associé un horodatage. Ainsi, la détection opérée permet de déterminer, à un moment donné, l'image ou la partie de l'image diffusée sur l'écran que l'utilisateur a souhaité sélectionner. Une application hébergée par l'objet communicant (un téléphone mobile par exemple) permet de placer l'article ainsi désigné dans le panier virtuel de l'utilisateur puis de procéder à la commande en ligne dudit panier. De même, il est possible en variante de désigner avec un objet communicant l'effigie d'un candidat méritant et participant à une émission de téléréalité ou de télé-crochet. L'utilisateur peut de la même manière transmettre un vote de soutien par exemple par SMS, ledit message SMS étant préparé par une application résidente de l'objet à partir de données désignant la zone active du téléviseur et l'heure (et/ou la date) à laquelle le votant a désigné son candidat favori en positionnant son téléphone mobile à proximité directe de la dalle du téléviseur au niveau de ladite effigie diffusée par la dalle du téléviseur.

L'invention permet ainsi d'imaginer un grand nombre d'applications différentes basées sur le principe de lier un tag au contenu diffusé par un dispositif interactif.

En liaison avec la figure 1 précédemment décrite, l'invention prévoit en outre que le contenu de moyens de mémorisation M coopérant avec le microcontrôleur U de l'unité de traitement UC (voire de l'unité de commande UCd) puissent être modifiés. L'invention permet ainsi d'adapter avec une grande flexibilité le traitement des différents zones actives caractérisées par le positionnent des tags fixés contre les moyens de diffusion. Le microcontrôleur U de l'unité de traitement peut en effet lire puis exécuter ou interpréter des instructions d'un programme enregistrées dans lesdits moyens de mémorisation M pour mettre en oeuvre un procédé de traitement de la sollicitation de l'un des tags connectés à l'unité de traitement par un objet communicant. Appliqué à l'exemple décrit en liaison avec la figure 1, un tel procédé peut comporter principalement une première étape pour recevoir par les moyens de communication C1 de l'unité de traitement UC un message de détection d'un champ électromagnétique FD1, FD2,..., FDn émis par l'un des tags T1, T2,..., Tn du système S, suivie d'une étape pour connaître et identifier le tag ayant émis ledit message. Un tel procédé peut comporter en outre une étape pour commander une modification de la teneur du contenu multimédia diffusé par les moyens de diffusion MD selon l'identification du tag ayant émis le message de détection. Le procédé peut en variante ou en outre préparer puis transmettre un message de données IO1, IO2,..., ou IOn à destination du tag ayant préalablement émis le message de détection d'un champ électromagnétique. Un tel message peut consister notamment à modifier le contenu des moyens de mémorisation dudit tag. Selon que la finalité du dispositif comportant un système interactif conforme à l'invention évolue, il est possible d'adapter voire de remplacer le procédé de traitement mis en oeuvre par l'unité de traitement UC. Il en est de même pour adapter le traitement associé à une ou plusieurs zones actives à la suite d'un changement du contenu multimédia diffusé par le dispositif.

Par ailleurs, le système interactif selon l'invention s'intègre aisément dans un dispositif initialement non conçu pour coopérer avec un tel système. Il suffit pour cela de mettre en oeuvre un procédé pour adapter tout dispositif comportant une unité de commande, des moyens pour diffuser un contenu multimédia, l'unité de commande coopérant avec lesdits moyens pour en assurer le pilotage. Un tel procédé comporte une étape pour intégrer audit dispositif un système interactif consistant à :
- positionner un ou plusieurs tags - tels que le tag Ti décrit en liaison avec la figure 2 - au dos préférentiellement des moyens de diffusion ;
- connecter le ou les tags à une unité de traitement (distincte voire identique à l'unité de commande des moyens de diffusion) telle que celle décrite en liaison avec la figure 1 ;
- charger au sein de moyens de mémorisation de l'unité de traitement un programme d'ordinateur comportant des instructions exploitables par le microcontrôleur de ladite unité de traitement qui lorsqu'elles sont exécutées ou interprétées déclenchent une ou plusieurs actions en lien avec le contenu diffusé.

Un tel procédé peut comporter une étape pour adapter l'unité de commande du dispositif - si celle-ci est dissociée de l'unité de traitement - pour qu'elle reçoive et exploite des requêtes en diffusion émises par l'unité de traitement pour modifier éventuellement en réponse la teneur ou la dynamique du contenu diffusé par les moyens de diffusion.

## Revendications

1. Système interactif (S) pour un dispositif comportant une unité de commande (UCd), des moyens pour diffuser un contenu multimédia (Md), l'unité de commande (UCd) coopérant avec lesdits moyens pour en assurer le pilotage, le système (S) comportant une unité de traitement (UC) comportant des moyens de communication (C1) et un microcontrôleur (U), au moins un tag (T1, T2, Ti, Tn) pour être apposé sur les moyens pour diffuser (Md) du dispositif, ledit au moins un tag comportant des premiers moyens de communication (Ct) pour coopérer directement avec le microcontrôleur (U) de l'unité de traitement (UC) via les moyens de communication (C1) de ladite unité de traitement et des deuxièmes moyens de communication (At) pour permettre une communication sans fil (CP) avec un objet communicant (Oc) lorsque celui-ci se trouve à portée dudit au moins un tag, l'unité de traitement (UC) étant agencée pour communiquer avec l'unité de commande (UCd) de sorte à déclencher au moins une action mise en oeuvre par l'unité de traitement comprenant la transmission d'une requête en diffusion (P1) à l'unité de commande (UCd) pour modifier la teneur du contenu multimédia diffusé par les moyens pour diffuser (Md), en réponse à une communication initiée par ledit au moins un tag (T1, T2, Ti, Tn) par les premiers moyens de communication (Ct) et via les moyens de communication (C1) vers ladite unité de traitement (Uc), ladite communication initiée par ledit au moins un tag (T1, T2, Ti, Tn) faisant suite à la détection de l'objet communicant (Oc) par ledit au moins un tag (T1, T2, Ti, Tn).

2. Système selon la revendication précédente, pour lequel ledit au moins un tag (T1, T2, Ti, Tn) comporte une mémoire (Mt) dont le contenu peut être lu par un objet communicant (Oc) lorsqu'une communication (CP) est établie entre le tag et ledit objet, la au moins une action mise en oeuvre par l'unité de traitement comprenant la mise à jour de la mémoire (Mt) du tag.

3. Système selon l'une quelconque des revendications précédentes, comprenant une pluralité de tags (T1, T2, Ti, Tn) configurés pour être respectivement apposés sur lesdits moyens pour diffuser (Md) et communiquant respectivement directement avec l'unité de traitement (UC).

4. Système selon l'une quelconque des revendications précédentes, pour lequel le ou les tags coopèrent avec l'unité de traitement (UC) au moyen d'un bus (B) filaire, parallèle, linéaire ou en anneau.

5. Système selon l'une quelconque des revendications précédentes, pour lequel le ou l'un des tags (T1, T2, Tn) émet un message de détection d'un champ électromagnétique (FD1, FD2, FDn) lorsque ledit tag a détecté la présence d'un champ électromagnétique généré par un objet communicant (Oc).

6. Système selon la revendication précédente, pour lequel l'unité de traitement (UC) communique en outre avec le ou l'un des tags (T1, T2, Tn) par un message de données (IO1, IO2, IOn).

7. Système selon l'une quelconque des revendications précédentes, pour lequel l'unité de traitement (UC) comporte des moyens de communication (C2) pour communiquer (P2) avec une deuxième unité de traitement (UD) distante.

8. Dispositif comportant une unité de commande (UCd), des moyens pour diffuser (Md) un contenu multimédia, l'unité de commande (UCd) coopérant avec lesdits moyens (Md) pour en assurer le pilotage, **caractérisé en ce qu'**il comporte en outre un système interactif (S) selon l'une quelconque des revendications précédentes.

9. Dispositif selon la revendication précédente pour lequel l'unité de traitement (UC) consiste en une même entité physique avec l'unité de commande (UCd).

10. Dispositif selon la revendication précédente, pour lequel les moyens pour diffuser (Md) comprennent une façade comportant un écran (Ed).

11. Dispositif selon la revendication précédente, pour lequel les moyens pour diffuser comprennent une paroi translucide associée à des moyens de détection d'un pointeur capacitifs ou optiques ; lesdits moyens étant configurés pour déterminer une position d'un objet placé devant l'écran.

12. Procédé pour diffuser un contenu multimédia mis en oeuvre par un dispositif selon la revendication 8, le procédé comprenant au moins les étapes suivantes :
a. lorsque un objet communicant (Oc) se trouve à portée dudit au moins un tag (T1, T2, Ti, Tn), celui-ci communique sans fil (CP) par les deuxièmes moyens de communication (At) avec l'objet communicant (Oc) ;
b. ledit au moins un tag (T1, T2, Ti, Tn) émet alors par les premiers moyens de communication (Ct) un message de détection de l'objet communicant (Oc) directement à l'unité de traitement (Uc) via les premiers moyens de communication (C1) ;
c. l'unité de traitement (UC) déclenche ensuite une action comprenant la transmission d'une requête en diffusion (P1) à l'unité de commande (UCd) ;
d. en réponse, l'unité de commande (UCd) pilote les moyens de diffusion (Md) pour modifier la teneur du contenu multimédia diffusé.

13. Procédé selon la revendication précédente mis en oeuvre par une unité de traitement (UC) d'un système interactif selon l'une quelconque des revendications 5 à 7, **caractérisé en ce qu'**il comporte une étape pour recevoir par les moyens de communication (C1) de l'unité de traitement (UC) un message de détection d'un champ électromagnétique (FD1, FD2, FDn) émis par le ou l'un des tags (T1, T2, Tn) du système, une étape pour connaître le tag ayant émis ledit message, une étape pour requérir une modification de la teneur du contenu multimédia diffusé par les moyens de diffusion (Md) en fonction du tag ayant émis le message de détection.

14. Procédé selon la revendication précédente, comprenant une étape pour transmettre un message de données (IO1, IO2, IOn) à destination du tag (T1, T2, Tn) ayant préalablement émis ledit message de détection d'un champ électromagnétique (FD1, FD2, FDn), ledit message de données consistant à modifier le contenu des moyens de mémorisation (Mt) du tag.

15. Programme d'ordinateur comportant des instructions exploitables par le microcontrôleur (U) de l'unité de traitement (UC) d'un système interactif (S) conforme à l'une quelconque des revendications 5 à 7, qui lorsqu'elles sont exécutées ou interprétées par ledit microcontrôleur déclenchent la mise en oeuvre d'un procédé selon l'une quelconque des revendications 13 ou 14.

## Patentansprüche

1. Interaktives System (S) für eine Vorrichtung, die eine Steuereinheit (UCd) der Mittel zum Verbreiten eines Multimedia-Inhalts (Md) umfasst, wobei die Steuereinheit (UCd) mit den Mitteln zusammenwirkt, um deren Ansteuerung sicherzustellen, wobei das System (S) eine Verarbeitungseinheit (UC) umfasst, welche Kommunikationsmittel (C1) und eine Mikrosteuerung (U) umfasst, mindestens ein Tag (T1, T2, Ti, Tn) zum Angebrachtwerden an den Mitteln zum Verbreiten (Md) der Vorrichtung, wobei das mindestens eine Tag erste Kommunikationsmittel (Ct) zum direkten Zusammenwirken mit der Mikrosteuerung (U) der Verarbeitungseinheit (UC) via die Kommunikationsmittel (C1) der Verarbeitungseinheit, und zweite Kommunikationsmittel (At) umfasst zum Ermöglichen einer Drahtloskommunikation (CP) mit einem kommunizierenden Objekt (Oc), wenn sich dasselbe in Reichweite des mindestens einen Tags befindet, wobei die Verarbeitungseinheit (UC) dafür eingerichtet ist, so mit der Steuereinheit (UCd) zu kommunizieren, dass mindestens eine von der Verarbeitungseinheit umgesetzte Aktion ausgelöst wird, welche das Übertragen einer Verbreitungsanfrage (P1) an die Steuereinheit (UCd) zum Modifizieren des Gehalts des von den Mitteln zum Verbreiten (Md) verbreiteten Multimediainhalts in Antwort auf eine von dem mindestens einen Tag (T1, T2, Ti, Tn) über die ersten Kommunikationsmittel (Ct) und via die Kommunikationsmittel (C1) zur Verarbeitungseinheit (Uc) hin initiierte Kommunikation umfasst, wobei die von dem mindestens einen Tag (T1, T2, Ti, Tn) initiierte Kommunikation auf das Erfassen des kommunizierenden Objekts (Oc) durch das mindestens eine Tag (T1, T2, Ti, Tn) folgt.

2. System nach dem vorstehenden Anspruch, wobei das mindestens eine Tag (T1, T2, Ti, Tn) einen Speicher (Mt) umfasst, dessen Inhalt von einem kommunizierende Objekt (Oc) gelesen werden kann, wenn eine Kommunikation (CP) zwischen dem Tag und dem Objekt aufgebaut ist, wobei die mindestens eine von der Verarbeitungseinheit umgesetzte Aktion das Aktualisieren des Speichers (Mt) des Tags umfasst.

3. System nach einem der vorstehenden Ansprüche, das eine Vielzahl von Tags (T1, T2, Ti, Tn) umfasst, die dafür konfiguriert sind, jeweils an den Mitteln zum Verbreiten (Md) angebracht zu werden, und jeweils direkt mit der Verarbeitungseinheit (UC) kommunizieren.

4. System nach einem der vorstehenden Ansprüche, wobei das oder die Tags mittels eines drahtgebundenen, parallelen, linearen oder Ringbusses (B) mit der Verarbeitungseinheit (UC) zusammenwirken.

5. System nach einem der vorstehenden Ansprüche, wobei das oder eines der Tags (T1, T2, Tn) eine Erfassungsnachricht eines elektromagnetischen Feldes (FD1, FD2, FDn) sendet, wenn das Tag das Vorhandensein eines von einem kommunizierenden Objekt (Oc) erzeugten elektromagnetischen Feldes erfasst hat.

6. System nach dem vorstehenden Anspruch, wobei die Verarbeitungseinheit (UC) weiter über eine Datennachricht (IO1, IO2, IOn) mit dem oder einem der Tags (T1, T2, Tn) kommuniziert.

7. System nach einem der vorstehenden Ansprüche, wobei die Verarbeitungseinheit (UC) Kommunikationsmittel (C2) zum Kommunizieren (P2) mit einer zweiten, fernen Verarbeitungseinheit (UD) umfasst.

8. Vorrichtung, die eine Steuereinheit (UCd) der Mittel zum Verbreiten (Md) eines Multimedia-Inhalts umfasst, wobei die Steuereinheit (UCd) mit den Mitteln (Md) zusammenwirkt, um deren Ansteuerung sicherzustellen, **dadurch gekennzeichnet, dass** sie weiter ein interaktives System (S) nach einem der vorstehenden Ansprüche umfasst.

9. Vorrichtung nach dem vorstehenden Anspruch, wobei die Verarbeitungseinheit (UC) in ein und derselben selben physischen Entität mit der Steuereinheit (UCd) besteht.

10. Vorrichtung nach dem vorstehenden Anspruch, wobei die Mittel zum Verbreiten (Md) eine Front umfassen, welche einen Bildschirm (Ed) umfasst.

11. Vorrichtung nach dem vorstehenden Anspruch, wobei die Mittel zum Verbreiten eine durchsichtige Wand umfassen, die mit kapazitiven oder optischen Mitteln zum Erfassen eines Zeigers verknüpft ist; wobei die Mittel dafür konfiguriert sind, eine Position eines Objekts zu bestimmen, das vor dem Bildschirm platziert ist.

12. Verfahren zum Verbreiten eines Multimedia-Inhalts, das von einer Vorrichtung nach Anspruch 8 umgesetzt wird, wobei das Verfahren mindestens die folgenden Schritte umfasst:
a. wenn sich ein kommunizierendes Objekt (Oc) in Reichweite des mindestens einen Tags (T1, T2, Ti, Tn) befindet, kommuniziert dasselbe drahtlos (CP) über die zweiten Kommunikationsmittel (At) mit dem kommunizierenden Objekt (Oc);
b. das mindestens eine Tag (T1, T2, Ti, Tn) sendet dann über die ersten Kommunikationsmittel (Ct) eine Erfassungsnachricht des kommunizierenden Objekts (Oc) via die ersten Kommunikationsmittel (C1) direkt an die Verarbeitungseinheit (Uc);
c. die Verarbeitungseinheit (UC) löst anschließend eine Aktion aus, die das Übertragen einer Verbreitungsanfrage (P1) an die Steuereinheit (UCd) umfasst;
d. die Steuereinheit (UCd) steuert in Antwort die Verbreitungsmittel (Md) an, um den Gehalt des verbreiteten Multimedia-Inhalts zu modifizieren.

13. Verfahren nach dem vorstehenden Anspruch, das von einer Verarbeitungseinheit (UC) eines interaktiven Systems nach einem der Ansprüche 5 bis 7 umgesetzt wird, **dadurch gekennzeichnet, dass** es einen Schritt zum Empfangen, durch die Kommunikationsmittel (C1) der Verarbeitungseinheit (UC), einer von dem oder einem der Tags (T1, T2, Tn) des Systems gesendeten Erfassungsnachricht eines elektromagnetischen Feldes (FD1, FD2, FDn) umfasst, einen Schritt zum Erkennen des Tags, welches die Nachricht gesendet hat, einen Schritt zum Anfragen einer Modifikation des Gehalts des von den Verbreitungsmitteln (Md) verbreiteten Multimedia-Inhalts in Abhängigkeit von dem Tag, welches die Erfassungsnachricht gesendet hat.

14. Verfahren nach dem vorstehenden Anspruch, das einen Schritt zum Übertragen einer Datennachricht (IO1, IO2, IOn) an das Tag (T1, T2, Tn) umfasst, welches zuvor die Erfassungsnachricht eines elektromagnetischen Feldes (FD1, FD2, FDn) gesendet hat, wobei die Datennachricht darin besteht, den Inhalt der Speichermittel (Mt) des Tags zu modifizieren.

15. Computerprogramm, das Anweisungen umfasst, die von der Mikrosteuerung (U) der Verarbeitungseinheit (UC) eines interaktiven Systems (S) gemäß einem der Ansprüche 5 bis 7 einsetzbar sind, die, wenn sich von der Mikrosteuerung ausgeführt oder interpretiert werden, die Umsetzung eines Verfahrens nach einem der Ansprüche 13 oder 14 auslösen.

## Claims

1. Interactive system (S) for a device comprising a control unit (UCd), means for distributing a multimedia content (Md), the control unit (UCd) cooperating with said means to ensure the controlling thereof, the system (S) comprising a processing unit (UC) comprising communication means (C1) and a microcontroller (U), at least one tag (T1, T2, Ti, Tn) to be affixed on the means for distributing (Md) the device, said at least one tag comprising the first communication means (Ct) to cooperate directly with the microcontroller (U) of the processing unit (UC) via the communication means (C1) of said processing unit and the second communication means (At) to enable a wireless communication (CP) with a communicating object (Oc) when it is located in range of said at least one tag, the processing unit (UC) being arranged to communicate with the control unit (UCd) so as to trigger at least one implementation action by the processing unit comprising the transmission of a distribution request (P1) to the control unit (UCd) to modify the amount of multimedia content distributed by the distribution means (Md), in response to a communication initiated by said at least one tag (T1, T2, Ti, Tn) by the first communication means (Ct) and via the communication means (C1) to said processing unit (Uc), said communication initiated by said at least one tag (T1, T2, Ti, Tn) following the detection of the communicating object (Oc) by said at least one tag (T1, T2, Ti, Tn).

2. System according to the preceding claim, for which said at least one tag (T1, T2, Ti, Tn) comprises a memory (Mt) of which the content can be read by a communicating object (Oc) when a communication (CP) is established between the tag and said object, the at least one implementation action by the processing unit comprising the updating of the memory (Mt) of the tag.

3. System according to any one of the preceding claims, comprising a plurality of tags (T1, T2, Ti, Tn) configured to be respectively affixed on said distribution means (Md) and communicating respectively directly with the processing unit (UC).

4. System according to any one of the preceding claims, for which the tag(s) cooperating with the processing unit (UC) by means of a wire, parallel, linear or ring bus (B).

5. System according to any one of the preceding claims, for which the or one of the tags (T1, T2, Tn) emits a message of detecting an electromagnetic field (FD1, FD2, FDn) when said tag has detected the presence of an electromagnetic field generated by a communicating object (Oc).

6. System according to the preceding claim, for which the processing unit (UC) further communicates with the or one of the tags (T1, T2, Tn) through a data message (IO1, IO2, IOn).

7. System according to any one of the preceding claims, for which the processing unit (UC) comprises communication means (C2) to communicate (P2) with a second remote processing unit (UD).

8. Device comprising a control unit (UCd), means for distributing (Md) a multimedia content, the control unit (UCd) cooperating with said means (Md) to ensure the controlling thereof, **characterised in that** it further comprises an interactive system (S) according to any one of the preceding claims.

9. Device according to the preceding claim for which the processing unit (UC) consists of one same physical entity with the control unit (UCd).

10. Device according to the preceding claim, for which the distribution means (Md) comprise a front comprising a screen (Ed).

11. Device according to the preceding claim, for which the distribution means comprise a translucid wall associated with the means for detecting a capacitive or optical pointer; said means being configured to determine a position of an object placed in front of the screen.

12. Method for distributing a multimedia content implemented by a device according to claim 8, the method comprising at least the following steps:
a. when a communicating object (Oc) is located in range of said at least one tag (T1, T2, Ti, Tn), it communicates wirelessly (CP) through the second means for communicating (At) with the communicating object (Oc);
b. said at least one tag (T1, T2, Ti, Tn) thus emits by the first communication means (Ct), a message of detecting the communicating object (Oc) directly to the processing unit (Uc) via the first communication means (C1);
c. the processing unit (UC) then triggers an action comprising the transmission of a distribution request (P1) to the control unit (UCd);
d. in response, the control unit (UCd) controls the distribution means (Md) to modify the amount of multimedia content distributed.

13. Method according to the preceding claim implemented by a processing unit (UC) of an interactive system according to any one of claims 5 to 7, **characterised in that** it comprises a step for receiving by the communication means (C1) of the processing unit (UC), a message of detecting an electromagnetic field (FD1, FD2, FDn) emitted by the or one of the tags (T1, T2, Tn) of the system, a step for knowing the tag having emitted said message, a step for requiring a modification of the amount of multimedia content distributed by the distribution means (Md) according to the tag having emitted the detection message.

14. Method according to the preceding claim, comprising a step for transmitting a data message (IO1, IO2, IOn) to the tag (T1, T2, Tn) having previously emitted said message of detecting an electromagnetic field (FD1, FD2, FDn), said data message consisting of modifying the content of the memorisation means (Mt) of the tag.

15. Computer program comprising instructions that can be utilised by the microcontroller (U) of the processing unit (UC) of an interactive system (S) that conforms with any one of claims 5 to 7, which when they are executed or interpreted by said microcontroller, trigger the implementation of a method according to any one of claims 13 or 14.
